## Europäisches Patentamt

## European Patent Office

## Office européen des brevets

(19)

(11) Veröffentlichungsnummer: **0 004 374 B1**

(12) **EUROPÄISCHE PATENTSCHRIFT**

(45) Veröffentlichungstag der Patentschrift:
16.09.81

(21) Anmeldenummer: 79100852.7

(22) Anmeldetag: 21.03.79

(51) Int. Cl.³: **F 16 B 7/04**

(54) Vorrichtung zum Verbinden von zwei Profilstäben.

(30) Priorität: **22.03.78 DE 2812502**

(43) Veröffentlichungstag der Anmeldung:
**03.10.79 Patentblatt 79/20**

(45) Bekanntmachung des Hinweises auf die Patenterteilung:
**16.09.81 Patentblatt 81/37**

(84) Benannte Vertragsstaaten:
**BE CH FR GB LU NL SE**

(56) Entgegenhaltungen:
**FR-A-2 071 943**
**FR-A-2 180 404**
**FR-A-2 267 472**
**FR-A-2 255 491**
**FR-A-2 294 387**

(73) Patentinhaber: **Dr. Heinz Kluge Nachf. GmbH & Co.,**
**Wiesenstrasse 21, D-4000 Düsseldorf 11 (DE)**

(72) Erfinder: **Stoczek, Hans Joachim, Am Moschenhof 10a,**
**D-4000 Düsseldorf (DE)**

(74) Vertreter: **Junius, Walther, Dr., Wolfstrasse 24,**
**D-3000 Hannover 81 (DE)**

## Vorrichtung zum Verbinden von zwei Profilstäben

Die vorliegende Erfindung betrifft eine Vorrichtung zum Verbinden von zwei Profilstäben, von denen der eine einen Schacht und der andere mindestens eine C-förmige Schiene aufweist, bestehend aus einem quaderförmigen, in den Schacht einschiebbaren Kern mit einer Ausnehmung für die Aufnahme einer Feder und eines Hakenbolzens, der am Ende mit einem in die C-Schiene eingreifenden Haken versehen ist und eine Ausnehmung für dessen Halterung mittels einer Schraube aufweist, die durch ein Loch in der Wandung des Schachtes einsetzbar ist.

Eine derartige Vorrichtung ist bekannt. Sie wird dort angewandt, wo der in die C-Schiene eingreifende Haken an seinem bolzenförmigen Ende einen kleineren Querschnitt als den Schacht-Querschnitt aufweist. Der hier verwendete Kern weist ein Gewindeloch auf, in welches eine durch ein Loch in der Schachtwandung hindurchzustekkende Schraube eingreift und mit ihrer spitzen Vorderseite in eine Ausnehmung des bolzenförmigen Teiles des Hakenbolzens eingreift.

Diese bekannte Vorrichtung hat in mancherlei Hinsicht nicht befriedigt. Sie war schwer zu montieren, in der Herstellung nicht billig und bei wiederholter Montage zeigten sich Aufweitungen des mit grosser Präzision herzustellenden Loches in der Schachtwandung.

Ausserdem muss die durchgesteckte Schraube aus funktionellen Gründen, damit sie sich beim Betätigen der Vorrichtung nicht unter die Schachtwandung zieht, immer aus dem Loch herausragen. Dadurch wurde die Stapelbarkeit derartiger Teile erschwert und die Gefahr von Transportschäden erhöht.

Es wurde versucht, diese Nachteile durch eine Vorrichtung zu beseitigen, die in der DE-U 7 413 640 beschrieben ist. Auch diese Vorrichtung arbeitet mit einem längs verschiebbaren, eine konische Ausnehmung aufweisenden Bolzen mit an einem Ende angebrachten Haken, welcher zwei Profilstäbe lösbar miteinander verbindet, wobei eine mit einer konischen Spitze versehene, in einer Gewindebüchse geführte Schraube senkrecht und exzentrisch zu der konischen Ausnehmung angeordnet ist und mit dem Bolzen zusammenwirkt, um die beiden Profilstäbe gegeneinander zu pressen. Dabei ist dieser Bolzen in einem Kern verschiebbar und feststellbar gelagert, der in dem Schacht des einen Profils eingesteckt ist. Bolzen, Gewindebüchse und die Schraube sind im Einsatzkern angeordnet. Während bei der Vorrichtung der eingangs genannten Art als Mittel für das Halten des Einsatzkernes in dem einen Profilstab die Schraube benutzt wird, wird hier eine Andrehung der Gewindebüchse benutzt, in die die Schraube eingeschraubt ist. Diese Vorrichtung besteht aus einer Vielzahl kompliziert herzustellender Teile und ist daher teuer und nicht einfach zu montieren. Da in verschiedenen Profilstäben unterschiedliche Schachtdimensionen vorhanden sind, ist für jeden Schachtquerschnitt ein besonderer Kern vorrätig zu halten, es sei denn, die Profile würden durch Innenrippen in Zukunft einmal so gestaltet, dass durch die Innenrippen der Kern festgelegt würde. Die bekannte Konstruktion benötigt eine bestimmte Kern- bzw. Schachtgrösse, so dass in kleinen Schachtquerschnitten diese Konstruktion überhaupt nicht einsetzbar ist.

Durch die FR-A 2 071 943 ist eine Vorrichtung zum Verbinden von zwei Profilstäben bekanntgeworden, bei der in dem Kern eine Ausnehmung für die Aufnahme eines den Hakenbolzen umhüllenden Gehäuses vorgesehen ist. Dieses Gehäuse wird mittels einer Schraube fest mit dem Hakenbolzen verbunden. Dadurch entsteht eine feste Verbindung zwischen dem Hakenbolzen, dem Gehäuse und der Schraube. Diese fest miteinander verbundenen Teile liegen aber locker in dem Kern und in dem Profilstab. Dadurch lässt sich eine feste Verbindung nur schwer herstellen. Zudem ist die Herstellung des Gehäuses aufwendig und teuer.

Durch die FR-A 2 294 387 ist eine andere Möglichkeit der Verbindung zweier Profilstäbe miteinander gezeigt. Das eine Profil weist zwei Hohlräume auf, wobei in den einen Hohlraum der Hakenbolzen, in den anderen Hohlraum eine Vierkantmutter eingesteckt wird. Diese Ausführungsform erfordert besondere Profile für die Verbindung.

Diese Nachteile vermeidet die vorliegende Erfindung.

Es ist die Aufgabe der vorliegenden Erfindung, eine höchst einfach aufgebaute, billig in unterschiedlichen Dimensionen herzustellende und leicht zu montierende Vorrichtung zum Verbinden von zwei Profilstäben zu schaffen, die in Schächten verschiedensten Querschnittes verwendbar ist und die geringen Raumbedarf aufweist.

Die Erfindung löst diese Aufgabe dadurch, dass der Kern zwischen seiner Oberflächen und seiner Ausnehmung für die Aufnahme des Hakenbolzens eine zweite Ausnehmung für die Aufnahme einer Vierkantmutter aufweist, in deren Gewinde die Schraube eindrehbar ist und die um das Gewinde einen Bund aufweist, welcher in das Loch einrastbar ist, wobei die Breite der zweiten Ausnehmung in Längsrichtung des Kerns der Breite der Vierkantmutter entspricht.

Eine derartige Vorrichtung ist sehr einfach herstellbar, weil sie aus wenigen, leicht herstellbaren und teilweise bereits genormten Teilen besteht.

Vorteilhaft ist es, wenn die Tiefe der Mutter einschliesslich des Bundes der Tiefe der Ausnehmung im Kern unter Belassung eines geringen Toleranzraumes entspricht. Auf diese Weise wird eine sehr stabile passgenaue und sichere Verbindung erzielt, die sich leicht montieren lässt.

Um diese Vorrichtung für Schachtquerschnitte verschiedener Breiten benutzen zu können, ist es zweckmässig, wenn die zweite Ausnehmung sich von einer Seite des Kernes zur anderen erstreckt und wenn die Vierkantmutter eine Länge aufweist, die grösser als die Breite des Kernes ist und die der einen Breitendimension des Schachtes entspricht, oder die Mutter durch zwei Distanzstücke verbreitert und beidseitig dadurch auf die Breitdimension des Schachtes gebracht ist, während die anderen Breitendimensionen von Schacht und Kern einander entsprechen. Zweckmässigerweise hat der Kern der Vorrichtung einen rechteckigen Querschnitt, damit er in Schächten von Profilschienen unterschiedlicher Dimension eingesetzt werden kann. Der Kern kann dann sowohl auf der Schmalseite als auch auf der längeren Seite des Rechteckes seines Querschnittes eine Ausnehmung erhalten, in die die Vierkantmutter eingesetzt werden kann. Zweckmässig ist es, wenn der Kern in Verlängerung der Ebenen der Ausnehmung für die Aufnahme der Mutter Nuten an seinen Aussenflächen und/oder der Wandung der Ausnehmung für den Bolzen aufweist. Bei der Herstellung der Ausfräsung für die Aufnahme der Vierkantmutter bildet sich der Grat dann in diesen Nuten, so dass der beim Ausfräsen entstehende Grat nicht mühsam entfernt werden muss, da er in den Nuten die Handhabung des Kernes nicht stört.

Vorteilhaft ist es, wenn die dem Bolzen zugewandte Seite der Vierkantmutter, das ist die dem Bund abgewandte Seite der Vierkantmutter, eine Abschrägung aufweist. Hierdurch wird erreicht, dass die Vorrichtung leichter im Schacht eines Hohlprofiles montierbar ist, weil dann nämlich der Bolzen leichter einschiebbar ist. Aus diesem Grunde ist es ebenfalls zweckmässig, wenn das dem Haken abgewandte Ende des Bolzens eine Abschrägung aufweist.

Vorteilhafterweise wird der Kern aus einem Strangpressprofil hergestellt. Das Ende der Ausnehmung für den Bolzen wird zweckmässigerweise durch einen Stopfen, eine Schraube oder dergleichen verschlossen. Die Herstellung als Strangpressprofil ist besonders einfach, wenn der Kern einen in die Ausnehmung für die Aufnahme des Bolzens vom Rande des Kernes her übergehenden Schlitz aufweist. Dann ist nämlich das Profil des Kernes nicht als Hohlprofil, sondern als ein U-förmiges Profil herstellbar. Auf die Stabilität des Kernes hat dieses keinen Einfluss.

Das Wesen der vorliegenden Erfindung ist nachstehend anhand eines in der Zeichnung schematisch dargestellten Ausführungsbeispieles näher erläutert. Es zeigen:

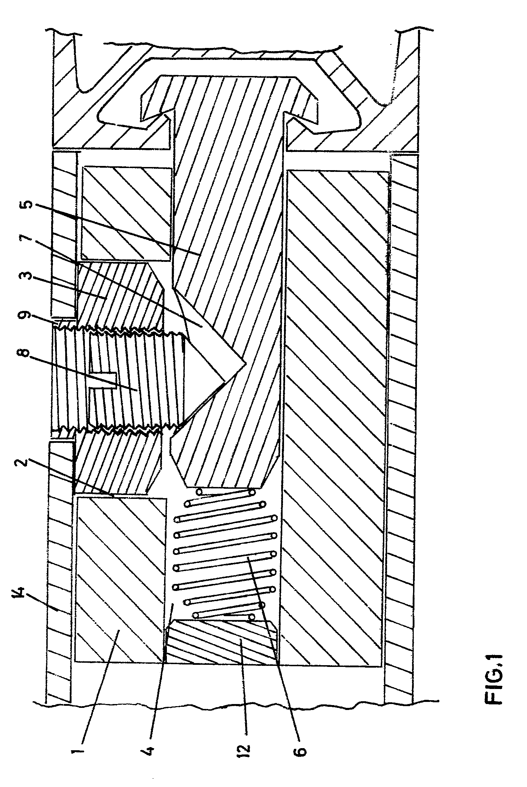

Fig. 1 einen Querschnitt durch eine in den Schacht eines Hohlprofils eingesetzte Vorrichtung.

Fig. 2 eine Stirnseitenansicht des Kernes der Vorrichtung.

Fig. 3 eine Seitenansicht des Kernes.

Fig. 4 eine Draufsicht auf den Kern.

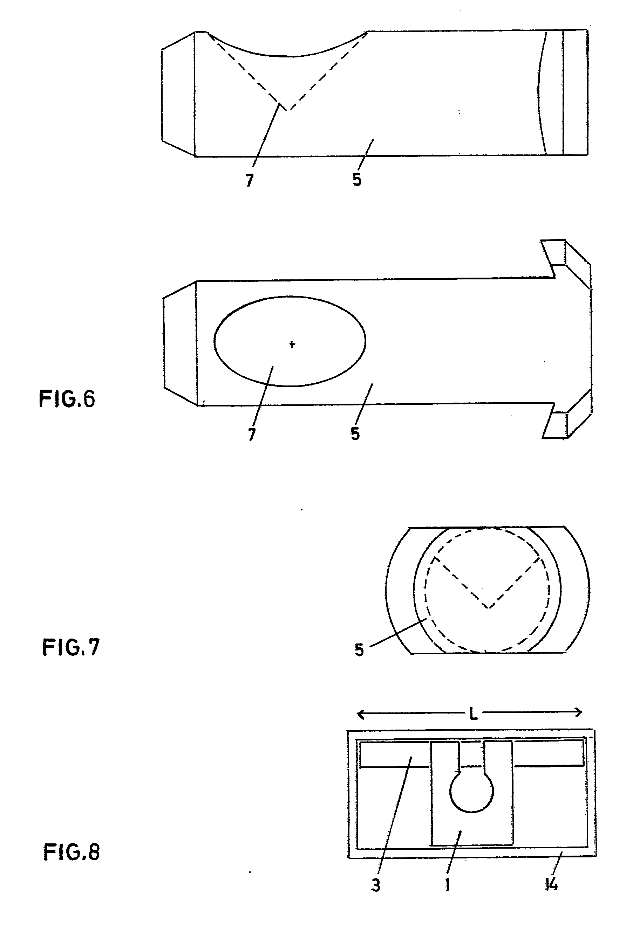

Fig. 5 eine Seitenansicht der Vierkantmutter.

Fig. 6 eine Seitenansicht des Bolzens.

Fig. 7 eine Stirnseitenansicht des Bolzens.

Fig. 8 eine Ansicht einer in einem weiten Schacht angebrachten Vorrichtung.

Die Vorrichtung besteht aus einem quaderförmigen Kern 1, der eine Ausnehmung 2 für die Aufnahme der Vierkantmutter 3 aufweist. Der Kern 1 weist eine zylindrische Ausnehmung 4 für die Aufnahme des bolzenförmigen Teiles des Hakenbolzens 5 auf. In die zylindrische Ausnehmung 4 ist vor dem Einsetzen des Hakenbolzens 5 eine Feder 6 eingelegt. Der Hakenbolzen 5 weist eine konische Bohrung oder keilförmige Ausnehmung 7 auf, in die die Spitze der Schraube 8, die in die Vierkantmutter 3 eingedreht ist, eingreift, um den Haken des Hakenbolzens 5 in einer C-Schiene eines Profilstabes festzuklemmen.

Die Breite A der Ausnehmung 2 ist so gewählt, dass die Vierkantmutter 3 mit geringfügigem Spiel in diese Ausnehmung einsetzbar ist. Die Höhe D der Ausnehmung ist so gewählt, dass sie der Höhe der Vierkantmutter 3 einschliesslich des Bundes 9 entspricht. Dabei ist es jedoch zweckmässig, die Höhe der Ausnehmung D so zu wählen, dass die Ausnehmung 2 teilweise in die zylindrische Ausnehmung 4 hineinreicht. Zweckmässig ist es, die Überdeckung von Ausnehmung 2 und zylindrischer Ausnehmung 4 so zu wählen, dass die Überdeckung eine Breite von 0,5–2 mm aufweist.

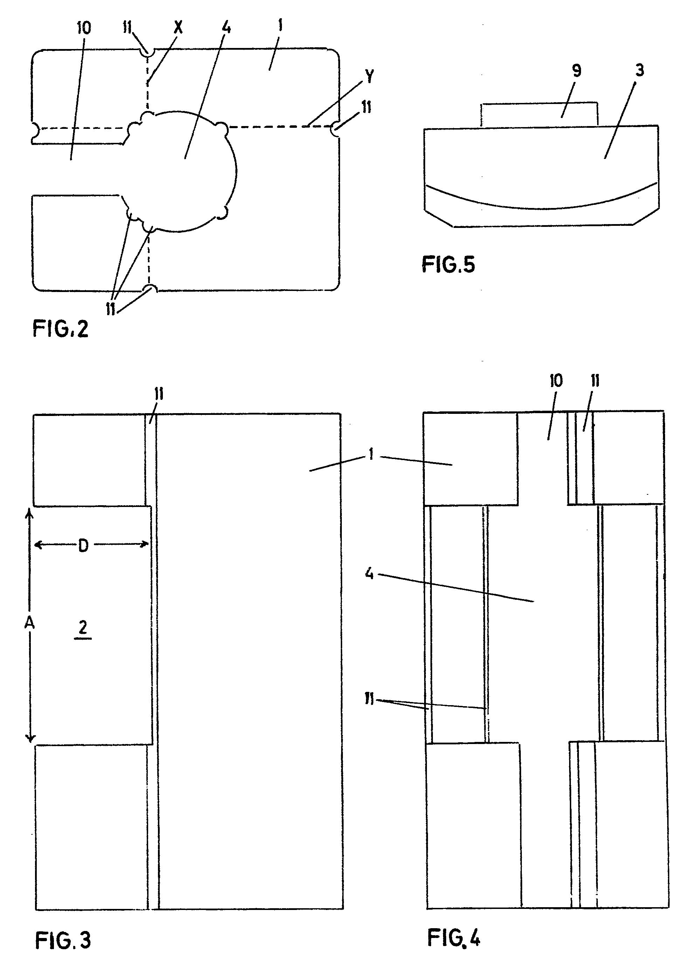

Der Kern 1 weist, wie Fig. 2 zeigt, nicht nur die zylindrische Ausnehmung 4 auf, sondern darüber hinaus eine den Rand des Kernes 1 mit der zylindrischen Ausnehmung 4 verbindende Ausnehmung 10 in Form eines Schlitzes. Die Ausnehmung 2 für die mit Bund versehene Vierkantmutter kann nicht nur in der Schmalseite des rechteckigen Profils angebracht werden – in diesem Fall wird die Fräsung entlang der gestrichelten Linie X vorgenommen –, sie kann auch aus der längeren Seite des Rechteckprofils des Kernes 1 herausgenommen sein – in diesem Falle verläuft die Unterkante der Ausnehmung 2 in der gestrichelten Linie Y. Damit bei den Fräsarbeiten bei der Herstellung der Ausnehmung 2 sich nicht ein Grat bildet, sind Nuten 11 an der Aussenwandung des Kernes sowie an der Innenwandung der zylindrischen Ausnehmung 4 vorgesehen.

Bei der Herstellung des Kernes aus einem Profil, das im Strangpressverfahren hergestellt ist, wird rückseitig die zylindrische Ausnehmung 4 durch einen Stopfen 12, eine Schraube oder dergleichen verschlossen, bevor bei der Montage der Kern in den Schacht eines Hohlprofiles eingeführt wird. Für diese Montage wird zuerst in der Wandung des Schachtes ein Loch von dem Durchmesser des Bundes der Vierkantmutter gebohrt. Daraufhin wird die Feder 6 und die Vierkantmutter in die entsprechenden Ausnehmungen des Kernes eingesetzt und der Kern mit diesen beiden Teilen in den Schacht des Hohlprofils eingeschoben. Die Feder muss dabei mit der Mutter etwas zusammengedrückt werden, was bewirkt, dass der Bund der Mutter beim Einschieben bereits in das in den Schacht gebohrte Loch eingerastet wird und ein ungewünschtes Durchschieben des Kernes verhindert. Danach wird der Hakenbolzen eingeschoben, der während seines Einschiebens die Vierkantmutter ganz nach oben drückt. Daraufhin wird eine Madenschraube in die Vierkantmutter von aussen her eingeschraubt. Diese setzt sich mit ihrer konischen Spitze in die konische Bohrung 7 des Hakenbolzens 5 und zieht diesen bei weiterem Einschrauben in den Schacht hinein. Dadurch kommt eine Klemmverbindung zustande.

Um die Montage zu erleichtern, ist es vorteilhaft, wenn das Ende des Hakenbolzens auf der dem Haken abgewandten Seite konisch gestaltet ist, beispielsweise unter einem Winkel von 30°, während die Vierkantmutter an ihrem dem Bolzen zugewandten Ende Abschrägungen von ca. 28° aufweist.

Eine Festsetzung in einem Schacht eines Profilstabes einer grösseren Breitendimension wird dadurch erreicht, dass als Vierkantmutter 3 ein rechteckiger Metallklotz gewählt wird, der in der Mitte eine Gewindebohrung und um diese herum einen Bund 9 aufweist, in seiner Breite der Breite A entspricht und in seiner Länge L der anderen Breitendimension des Querschnittes des Hohlprofils 11 entspricht, oder die Mutter durch zwei Distanzstücke verbreitert und beidseitig dadurch auf die Breitendimension des Schachtes gebracht ist.

## Patentansprüche

1. Vorrichtung zum Verbinden von zwei Profilstäben, von denen der eine einen Schacht und der andere mindestens eine C-förmige Schiene aufweist, bestehend aus einem quaderförmigen, in den Schacht einschiebbaren Kern (1) mit einer Ausnehmung (4) für die Aufnahme einer Feder und eines Hakenbolzens (5), der am Ende mit einem in die C-Schiene eingreifenden Haken versehen ist und eine Ausnehmung (7) für dessen Halterung mittels einer Schraube (8) aufweist, die durch ein Loch in der Wandung des Schachtes einsetzbar ist, dadurch gekennzeichnet, dass der Kern (1) zwischen seiner Oberläche und seiner Ausnehmung (4) für die Aufnahme des Hakenbolzens eine zweite Ausnehmung (2) für die Aufnahme einer Vierkantmutter (3) aufweist, in deren Gewinde die Schraube (8) eindrehbar ist und die um das Gewinde einen Bund (9) aufweist, welcher in das Loch einrastbar ist, wobei die Breite der zweiten Ausnehmung (2) in Längsrichtung des Kerns der Breite der Vierkantmutter (3) entspricht.

2. Vorrichtung nach Anspruch 1, dadurch gekennzeichnet, dass die zweite Ausnehmung (2) sich von einer Seite des Kernes (1) zur anderen erstreckt und dass die Vierkantmutter (3) eine Länge aufweist, die grösser als die Breite des Kernes (1) ist und die der einen Breitendimension (L) des Schachtes entspricht, oder die Mutter durch zwei Distanzstücke verbreitert und beidseitig dadurch auf die Breitendimension des Schachtes gebracht ist, während die anderen Breitendimensionen von Schacht und Kern (1) einander entsprechen.

3. Vorrichtung nach Anspruch 1 und 2, dadurch gekennzeichnet, dass die Tiefe der Mutter (3) einschliesslich des Bundes (9) der Tiefe der Ausnehmung (2) im Kern (1) unter Belassung eines geringen Toleranzraumes entspricht.

4. Vorrichtung nach Anspruch 1, dadurch gekennzeichnet, dass der Kern (1) in Verlängerung der Ebenen der zweiten Ausnehmung (2) Nuten (11) an seinen Aussenflächen und/oder der Wandung der Ausnehmung (4) für die Hakenbolzen (5) aufweist.

5. Vorrichtung nach Anspruch 1, dadurch gekennzeichnet, dass die dem Hakenbolzen (5) zugewandte Seite der Vierkantmutter (3), das ist die dem Bund (9) abgewandte Seite der Vierkantmutter (3), ein Abschrägung aufweist.

6. Vorrichtung nach Anspruch 1, dadurch gekennzeichnet, dass das dem Haken abgewandte Ende des Hakenbolzens (5) eine Abschrägung aufweist.

7. Vorrichtung nach Anspruch 1, dadurch gekennzeichnet, dass der Kern (1) einen in die Ausnehmung (4) für die Aufnahme des Hakenbolzens (5) übergehenden Schlitz (10) aufweist.

8. Vorrichtung nach Anspruch 1, dadurch gekennzeichnet, dass der Kern (1) aus einem Strangpressprofil hergestellt ist und das Ende der Ausnehmung (4) für den Hakenbolzen (5) durch einen Stopfen (12), eine Schraube oder dergleichen verschlossen ist.

9. Vorrichtung nach Anspruch 1, dadurch gekennzeichnet, dass die Feder (6) sich zumindest zum einen Ende hin im Querschnitt verjüngt und der Durchmesser kleiner ist als der Durchmesser am Ende des Hakenbolzenschaftes.

## Claims

1. A device for connecting two profiled rods, one of which comprises a shaft and the other of which comprises at least one C-shaped rail, wherein a parallelipiped-shaped core (1) inserted into the shaft has a recess (4) for the accommodation of a spring and a clutch bolt (5) provided at its end with a clutch which engages into the C-shaped rail, which rail possesses a recess (7) for its fixture by means of a screw (8) which can be inserted through a hole in the wall of the shaft, characterised in that between its surface and said recess (4) for the accommodation of the clutch bolt, the core (1) possesses a second recess (2) for the accommodation of a square nut (3), into a thread of which said screw (8) is engaged, and which possesses a collar (9), around the thread, which can be snapped into the hole, where the width of the second recess (2) in the longitudinal direction of the core corresponds to the width of the square nut (3).

2. A device as claimed in claim 1, characterised in that the second recess (2) extends from one side of the core (1) to the other, and the square nut (3) has a length which exceeds the width of the core (1) and which corresponds to one width dimension (L) of the shaft, or the nut is widened by means of two spacing components in such manner that on both sides it is brought to the width dimension of the shaft, whereas the other width dimensions of shaft and of the core (1) correspond to one another.

3. A device as claimed in claim 1 and 2, characterised in that the depth of the nut (3) including the collar (9) substantially corresponds to the depth of the recess (2) in the core (1), allowing for a slight tolerance space.

4. A device as claimed in claim 1, characterised in that, in an extension of the planes of the second recess (2), the core (1) possesses grooves (11) on its outer surfaces and/or the walls of said recess (4) for said clutch bolt (5).

5. A device as claimed in claim 1, characterised in that a level is provided at that side of the square nut (3) which faces towards the clutch bolt (5), namely that side of the square nut (3) which faces away from said collar (9).

6. A device as claimed in claim 1, characterised in that that end of the clutch bolt (5) which faces away from the clutch exhibits a bevel.

7. A device as claimed in claim 1, characterised in that the core (1) possesses a slot (10) which proceeds into the recess (4) which serves to accommodate the clutch bolt (5).

8. A device as claimed in claim 1, characterised in that the core (1) has been produced from an extruded profile, and the end of the recess (4) for the clutch bolt (5) is sealed by a plug (12), a screw, or the like.

9. A device as claimed in claim 1, characterised in that a spring (6) narrows in cross-section, at least towards one end, and its diameter is smaller than the diameter at the end of the clutch bolt shaft.

**Revendications**

1. Dispositif d'assemblage de deux barres profilées, dont l'une présente une cavité et l'autre au moins un rail en forme de C, dispositif constitué par un noyau parallélépipédique (1) pouvant être introduit dans la cavité et comportant un évidement (4) pour la réception d'un ressort et d'une cheville à crochet (5), qui est munie à son extrémité d'un crochet s'engageant dans le rail en C, et qui présente un évidement (7) pour permettre son immobilisation au moyen d'une vis (8) qui peut être insérée à travers un trou de la paroi de la cavité, ledit dispositif étant caractérisé en ce que le noyau (1) présente, entre sa surface extérieure et son évidement (4) de réception de la cheville à crochet, un second évidement (2) pour la réception d'un écrou quadrangulaire (3), dans le taraudage duquel la vis (8) peut être vissée et qui présente, autour de son taraudage, un collet (9) qui peut s'encliqueter dans le trou, tandis que la largeur du second évidement (2) dans la direction longitudinale du noyau correspond à la largeur de l'écrou quadrangulaire (3).

2. Dispositif suivant la revendication 1, caractérisé en ce que le second évidement (2) s'étend d'un côté du noyau (1) à l'autre, et en ce que l'écrou quadrangulaire (3) présente une longueur qui est plus grande que la largeur du noyau (1) et qui correspond à l'une des dimensions en largeur (L) de la cavité, ou bien en ce que l'écrou est élargi par deux pièces d'espacement et est ainsi amené, sur ses deux côtés, à la dimension en largeur de la cavité, tandis que les autres dimensions en largeur de la cavité et du noyau (1) se correspondent mutuellement.

3. Dispositif suivant les revendications 1 et 2, caractérisé en ce que l'épaisseur de l'écrou (3), y compris le collet (9), correspond à la profondeur de l'évidement (2) du noyau (1), en laissant subsister un faible jeu de tolérance.

4. Dispositif suivant la revendication 1, caractérisé en ce que le noyau (1) présente, dans le prolongement des plans de second évidement (2), des rainures (11) sur ses surfaces extérieures et/ou sur la paroi de l'évidement (4) prévu pour la cheville à crochet (5).

5. Dispositif suivant la revendication 1, caractérisé en ce que le côté de l'écrou quadrangulaire (3) tourné vers la cheville à crochet (5), c'est-à-dire la côté de l'écrou quadrangulaire (3) opposé au collet (9), présente un chanfrein.

6. Dispositif suivant la revendication 1, caractérisé en ce que l'extrémité de la cheville à crochet (5) opposée au crochet présente un chanfrein.

7. Dispositif suivant la revendication 1, caractérisé en ce que le noyau (1) présente und fente (10) débouchant dans l'évidement (4) de réception de la cheville à crochet (5).

8. Dispositif suivant la revendication 1, caractérisé en ce que le noyau (1) est fabriqué à partir d'un profilé filé, et en ce que l'extrémité de l'évidement (4) prévu pour la cheville à crochet (5) est obturée par un bouchon (12), une vis, ou analogues.

9. Dispositif suivant la revendication 1, caractérisé en ce que le ressort (6) va en s'amincissant en section droite au moins vers l'une de ses extrémités, et en ce que son diamètre est plus petit que le diamètre de l'extrémité de la cavité recevant la cheville à crochet.

FIG.1

FIG.2

FIG.5

FIG.3

FIG.4

FIG.6

FIG.7

FIG.8